# EUROPÄISCHE PATENTSCHRIFT

(11) **EP 1 410 507 B1**
(45) Veröffentlichungstag und Bekanntmachung des Hinweises auf die Patenterteilung: **24.11.2004**
(21) Anmeldenummer: 02787117.7
(22) Anmeldetag: 09.07.2002
(51) Int. Cl.: H03K 17/96

(54) **OPTOELEKTRONISCHE VORRICHTUNG ZUR POSITIONS- UND BEWEGUNGSERFASSUNG SOWIE ZUGEHÖRIGES VERFAHREN**
OPTOELECTRONIC DEVICE FOR DETECTING POSITION AND MOVEMENT AND METHOD ASSOCIATED THEREWITH
DISPOSITIF OPTOELECTRONIQUE DE DETECTION DE POSITION ET DE MOUVEMENT ET PROCEDE CORRESPONDANT

(30) Priorität: 16.07.2001 DE 10133823
(43) Veröffentlichungstag der Anmeldung: 21.04.2004
(73) Patentinhaber: Reime, Gerd, 75328 Schömberg (DE)
(72) Erfinder: Reime, Gerd, 75328 Schömberg (DE)
(74) Vertreter: Reinhardt, Harry
(86) Internationale Anmeldenummer: PCT/EP2002/007605
(87) Internationale Veröffentlichungsnummer: WO 2003/009476

(56) Entgegenhaltungen:
- EP-A- 0 551 240
- EP-A- 0 706 648
- DE-A- 10 001 955
- DE-A- 19 654 853
- GB-A- 2 190 488
- US-A- 5 103 085
- PATENT ABSTRACTS OF JAPAN vol. 1997, no. 02, 28. Februar 1997 (1997-02-28) -& JP 08 273503 A (NISSAN SHATAI CO LTD), 18. Oktober 1996 (1996-10-18)
- PATENT ABSTRACTS OF JAPAN vol. 007, no. 266 (P-239), 26. November 1983 (1983-11-26) -& JP 58 147670 A (TOKYO SHIBAURA DENKI KK), 2. September 1983 (1983-09-02)

## Beschreibung

Die Erfindung betrifft eine optoelektronische Vorrichtung sowie ein Verfahren zur Erfassung der Position und/oder Bewegung eines Objekts nach dem Oberbegriff der Ansprüche 1 oder 18.

Aus der europäischen Patentanmeldung EP 706 648 A1 ist ein optisches System zur Detektion einer Änderung in der Reflexion an einem Gegenstand bekannt, bei dem Fremdlichtänderungen keinen Einfluß auf den gemessenen Wert ausüben. Das dortige System wird im Wesentlichen als Scheibenwischersensor zur Erfassung der auf einer Windschutzscheibe auftreffenden Regentropfen verwendet, kann jedoch ebenso als Näherungssensor benutzt werden. Werden dabei die optoelektronischen Messstrecken flächig aufgebaut, lassen sich zweidimensionale Werte für die Bestimmung der Position und/oder Bewegung eines Objekts bestimmen.

Derartige Vorrichtungen sind auch in Form von bewegungssensitiven Bedienoberflächen bekannt. Stationäre Einrichtungen dieser Art gibt es in vielen Anwendungen, z. B. im Laptop als flächensparende Einknopf-Lösung oder als retativ großflächiges Element. Die Einknopf-Version reagiert sensibel auf seitlichen Druck. Bei der flächigen Lösung wird zur Steuerung des Cursors mit dem Finger oder einem speziellen Stift die Oberfläche berührt und durch Bewegung des Bedienelements Finger oder Stift auf dieser zweidimensionalen Ebene analog dazu ein sichtbares Element, z. B. ein Cursor, auf dem Bildschirm bewegt.

Diese Bedienelemente steuern den Cursor nur bei direkter Berührung der Bedienoberfläche, wird z B. der Finger von der Bedienoberfläche abgehoben, erlischt der Cursor oder bleibt unbewegt stehen.

Aus der älteren europäischen Patentanmeldung 01 942 808.5, veröffentlicht als WO 01/54276 A1 ist eine Anordnung bekannt, bei der zwei Lichtquelle- eine nach außen strahlende und eine ausschließlich auf den Empfänger strahlende - so angeordnet sind, dass eine Annäherung eines Betätigungselements, z. B. eines Fingers sowie das Bewegungsmuster beim Antippen der Bedienoberfläche erkannt wird. Beim Auftreffen auf der Bedienoberfläche wird ein Referenzwert gebildet, der dem Messwert entspricht, der kurz vor dem Auftreten des Fingers auf der Bedienoberfläche ansteht, um zu vermeiden, dass bereits leichte Bewegungen des Betätigungselements dazu führen, dass die Anlage des Fingers nicht mehr erkannt wird. Erst wenn der Finger wieder so weit von der bewegungssensitiven Bedienoberfläche abgehoben ist, dass der zuvor ermittelte Messwert unterschritten wird, wird der Finger als abgehoben erkannt Das Bewegungsmuster wird dabei so erfaßt, dass willentliche von unbeabsichtigten Betätigungen unterschieden werden können.

Ferner sind Navigationssysteme bekannt, die den Fahrer beim Auffinden seines Zieles vor allem in ihm fremden Regionen unterstützen. Diese Navigationssysteme werden bisher über manuelle Bedienelemente wie Dreh- und Tastschalter oder über im Lenkrad integrierte Bedienetemente betätigt Da der Benutzer allerdings nach den Vorgaben des jeweiligen Systems seine Fahrstrecke eingeben muss, tritt leicht eine im Wesentlichen durch die Art der Bedienung hervorgerufene Ablenkung ein.

Ausgehend von diesem Stand der Technik liegt der vorliegenden Erfindung die Aufgabe zugrunde eine optoelektronische Vorrichtung bzw. ein Verfahren zu schaffen, die bzw. das eine Positionserfassung auch in der dritten Dimension ermöglicht.

Diese Aufgabe wird durch eine optoelektronische Vorrichtung mit den Merkmalen des Anspruches 1 bzw. durch ein Verfahren mit den Merkmalen des Anspruches 18 gelöst.

Grundsätzlich wird zur Erfassung der dritten Dimension ein weiterer Takt vorgesehen, indem die Sender und ggf. auch die Empfänger den Raum gleichmäßig ausleuchten, so dass die Entfernung des Objekts von der Fläche bestimmbar ist. Dadurch wird die übliche Beschränkung der vorbekannten Einrichtungen auf eine flächige Arbeitsfläche aufgehoben. Durch die Verwendung von Strahlung wie z.B. Lichtstrahlung kann die Bedienfläche auch hinter einer sie schützenden, für die ausgesandte Strahlung durchlässigen Fläche angeordnet sein, z. B. hinter einem translucenten Fenster im Gehäuse bzw. sogar hinter einer für die Wellenlänge der ausgesandten Strahlungen translucenten Anzeige oder Anzeigenabdeckung wie z.B. der Anzeige eines eingelegten Ganges an einem KFZ-Schalthebel.

Es ergibt sich daraus eine optoelektronische Vorrichtung, die von der Bedienung her im Vesentlichen den bisher verwendeten kapazitiven, resistiven oder induktiven Lösungen entspricht. Durch "Antippen" der Bedienoberfläche erscheint im Anwendungsfall einer Cursorsteuerung der Cursor auf dem Bildschirm, durch Verschieben des Fingers oder Abrollen der Fingerkuppe verschiebt sich analog dazu der auf dem Bildschirm dargestellte Cursor. Hinzu kommt aber die Erfassung einer Bewegung oberhalb der Bedienoberfläche, also auch in einem Abstand von einigen Millimetern oder Zentimetern. Ermittelt wird also gleichzeitig der Abstand gemessen von der Oberfläche der Bedienfläche. Der Wert des momentanen Abstandes kann nun die weitere Funktion steuern. So kann z.B. durch leichtes Entfernen um einige Millimeter des Fingers von der Bedienoberfläche in eine andere Funktionsebene umgeschaltet werden. Auch in dieser Funküonsebene kann der Cursor durch Bewegung des Fingers, also auch z.B. in einem Abstand von wenigen Millimetern oder Zentimetern von der Bedienoberfläche gesteuert werden.

Ein praktisches Beispiel ist eine Steuerung der Detailvergrößerung im Cursorbereich z.B. in einem Navigationssystem eines Fahrzeugs sein, gesteuert durch leichtes Abheben des Betätigungselements, z.B. des Fingers von der Bedienoberfläche. Vorteilhafterweise kann gleichzeitig der gezoomte Ausschnitt durch Bewegung des Fingers entsprechend auch im Abstand zur Oberfläche bewegt werden. insbesondere im Fahrzeugbereich kann z.B. auf dem Schalt- oder Gangwahlhebel eine Ganganzeige vorgesehen sein. Gleichzeitig ist diese Anzeigefläche aber eine bewegungssensitive Bedienoberfläche, die z.B. mit dem Navigationssystem verbunden ist. Ist z.B. im Sichtbereich des Fahrers die Anzeige des Navigationssystems angeordnet, so muss der Fahrer zur Wegsuche z.B. nur den Finger über diese Bedienoberfläche bewegen oder die Fingerkuppe abrollen. Zur Ausschnittsvergrößerung der Karte des Navigationssystems hebt er den Finger ab, ohne die Hand vom Ganghebel nehmen zu müssen und ohne weitere Bedienelemente betätigen zu müssen. Die Gefahr der Ablenkung des Fahrers ist deutlich verringert. Die bisher erforderliche Tastenfunktion läßt sich damit durch eine rein optische, nicht mechanische Funktion bzw. Bedienung ersetzen.

Selbstverständlich kann eine derartige Funktion auch umgekehrt werden, so dass z.B. bei einer Fingerposition einige Zentimeter entfernt eine Gesamtübersicht z.B. über eine Landkarte zu sehen ist Ist der Cursor dann entsprechend positioniert, kann durch eine Bewegung hin zur Bedienoberfläche der im Cursorbereich liegende Teil entsprechend vergrößert werden, bis bei auf der Bedienoberfläche aufgelegtem Finger eine zum guten Lesen erforderliche Vergrößerung erreicht ist. In diesem vergrößerten Zustand kann man durch Verschieben des Fingers oder Rollen der Fingerkuppe die Position des hervorgehobenen Ausschnitts entsprechend variieren. Zur Übersicht kehrt man einfach wieder durch Entfernen des Fingers um einige Millimeter von der Bedienoberfläche zurück.

Weitere Vorteile ergeben sich aus den Unteransprüchen.

Im folgenden wird die Erfindung anhand eines Ausführungsbeispiels näher erläutert Es zeigen:
- Figur 1: Eine Schaltung für eine eindimensionale Positionsbestimmung.
- Figur 2-4: verschiedene Anordnungen von Sender und Empfänger,
- Figur 5: eine Schaltung für eine zweidimensionale Positionserfassung.
- Figur 6: eine alternative Schaltung zu Figur 5,
- Figur 7: eine Schaltung zur dreidimensionalen Positionserfassung,
- Figur 8: eine alternative Anordnung von Sendern und Empfängern mit überlagerter Kennfeldmatrix,
- Figur 9: eine Seitenansicht der Darstellung gemäß Figur 8,
- Figur 10,11: eine weitere Ausführungsform einer Anordnung im Schnitt und in Draufsicht,
- Fig. 12: den Einsatz der Vorrichtung in einem Fahrzeug.

Die Figuren zeigen eine optoelektronische Vorrichtung zur Erfassung der Position und/oder Bewegung eines Objekts O, die mehrere Sender A,B,C,D zur Aussendung einer Lichtstrahlung aufweisen. Den Sendern ist wenigstens ein Empfänger E bzw. E1-E4 zum Empfang der von den Sendern A-D ausgestrahlten und vom Objekt O rückgestrahlten Strahlung zugeordnet. Trägt das Objekt O selbst einen Sender erübrigt sich die Reflexion und die Strahlung wird direkt vom Objekt abgestrahlt. Zwischen den Sendern, dem Objekt und den Empfängern bilden sich je nach Beschaltung mehrere voneinander verschiedene Strahlungsstrecken, im Falle von Licht Lichtstrecken aus, an denen wenigstens ein Teil der Sender A-D und der wenigstens eine Empfänger E,E1-E4 beteiligt sind. Die Ansteuerung der Sender erfolgt über einen Oszillator 10 mit Invertierer 21 als Taktschaltung.

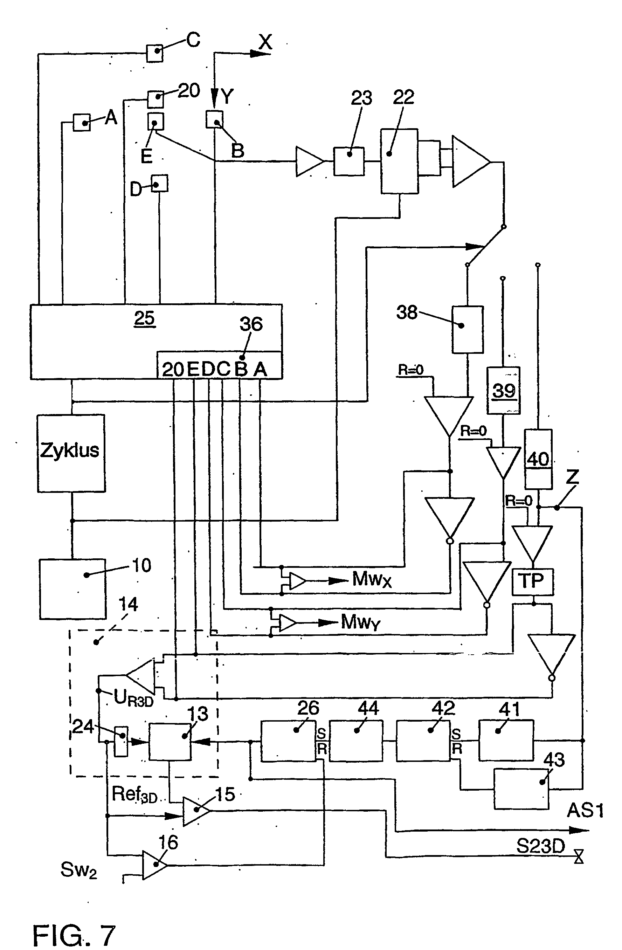

Die von den Empfängern ermittelten Signale werden einer Auswerteeinrichtung 11 zugeleitet, die die von den Empfängern E,E1-E4 aus den verschiedenen Lichtstrecken empfangenen Signale zunächst in zweidimensionale Werte x,y zur Erfassung der Position und/oder der Bewegung eines Objekts O wie z.B. eines Fingers in einer oder entlang einer Fläche 12 umsetzen. Zur dreidimensionalen Erfassung der Position und/oder Bewegung des Objekts O schaltet die Taktschaltung dann im Ausführungsbeispiel der Figur 7 die Sender A-D und/oder die Empfänger E,E1-E4 in einem weiteren Takt so wirksam, dass der Raum, in dem die Sender A-D einstrahlen, weitestgehend gleichmäßig bei gleichem Taktbetrieb ausgeleuchtet ist. Die Auswerteeinrichtung kann dann aufgrund der vom Objekt O während dieses weiteren Takts zurückgestrahlten Strahlung einen Wert zur Bestimmung der Entfernung d des Objekts O von der Fläche 12 bestimmen. Die Werte x oder y können auch nur eindimensional entlang einer Linie bestimmt werden. Oder beim Antippen eines Punkts erfolgt nur die Erfassung des Abstand des Objekts von einem "nulldimensionalen" Punkt.

Um eine Detektion eines Objekts, wie eines Betätigungselements wie z.B. eines Fingers oder Stifts, auch oberhalb der Bedienoberfläche zu ermöglichen, muss eine Strahlung, z.B. Licht einer bestimmten Wellenlänge ausgesandt werden, für die die Bedienoberfläche bzw. die Fläche 12 durchlässig ist. Im einfachsten Fall ist dies sichtbares Licht oder Infrarotlicht. Dieses wird an dem Objekt zurückgeworfen und kann unterhalb der Bedienoberfläche wieder empfangen werden. Grundsätzlich kann die "Rückstrahlung" auch dadurch erfolgen, dass das Objekt selbst eine Lichtquelle besitzt. Dies ist z.B. bei der Verwendung eines Joysticks denkbar, wie er z.B. für Kransteuerungen eingesetzt wird. Dieser Joystick befindet sich mit seinem unteren Ende in einem gegenüber Fremdlicht abgeschlossenen Raum, so dass die Veränderung der Position des unteren Endes des Joysticks durch Reflexionsmessung erkannt werden kann oder der Joystick selbst über eine entsprechende Lichtquelle verfügt. Im übrigen erfolgt die Erfassung wie folgt

Befindet sich das Betätigungselement nicht in einem abgeschlossenen Raum, so ist es zur Unterscheidung von Fremdlicht, z.B. von Lampen oder Sonnenlicht erforderlich, dass das Licht der Sendequellen mit einer Frequenz oberhalb der üblichen Störeinflüsse durch Glühbimen, Neonlampen usw. mittels der Taktschaltung gepulst betrieben wird, z.B. mit 100 kHz. Dadurch werden zwar die wesentlichen Störungen behoben, es verbleibt jedoch noch der sogenannte "Straytight-Effekf". Dies ist ein physikalischer Vorgang in der Photodiode, der sich in einer Veränderung der empfangenen Signalamplitude um einige Prozent im Bereich zwischen Empfang des getakteten Lichtsignals in völliger Dunkelheit und vollem Sonnenlicht ergibt. In der Praxis würde das bedeuten, dass sich die Position des Cursors auf dem Bildschirm bei Verwendung einer optischen, bewegungssensitiven Bedienoberfläche durch Änderung im Umgebungslicht verändern würde. Diese ungewollte Bewegung des Cursors z.B. beim Einschalten einer Lampe in der Nähe einer bewegungssensitiven Bedienoberfläche würde natürlich das ganze System in Frage stellen.

Eine Lösung zur Kompensation von Fremdlicht wurde in der Patentanmeldung EP 706 648 A1 beschrieben. Dieses Messprinzip wird in wesentlichen Bestandteilen auch dieser Anmeldung zugrunde gelegt, so dass der Offenbarungsgehalt jener Anmeldung ausdrücklich auch zum Gegenstand der vorliegenden Anmeldung gemacht wird.

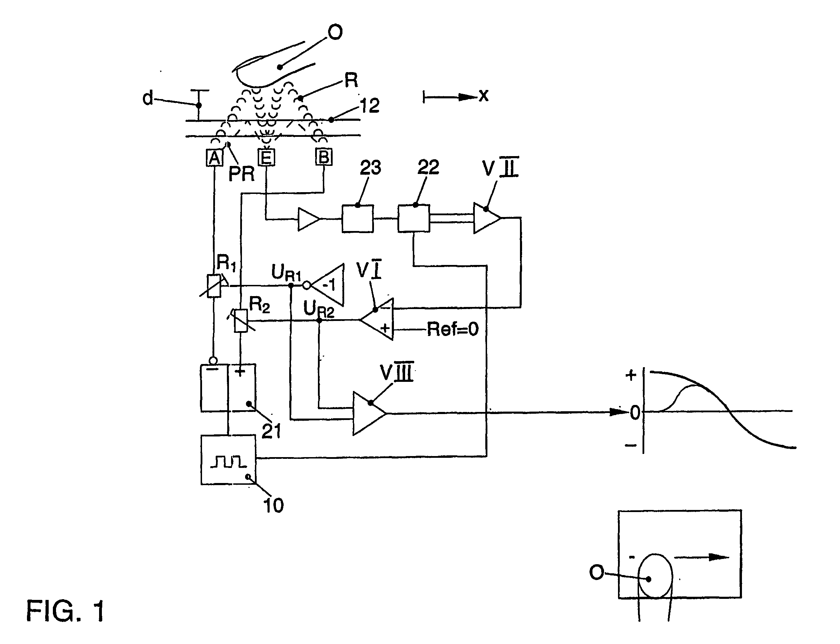

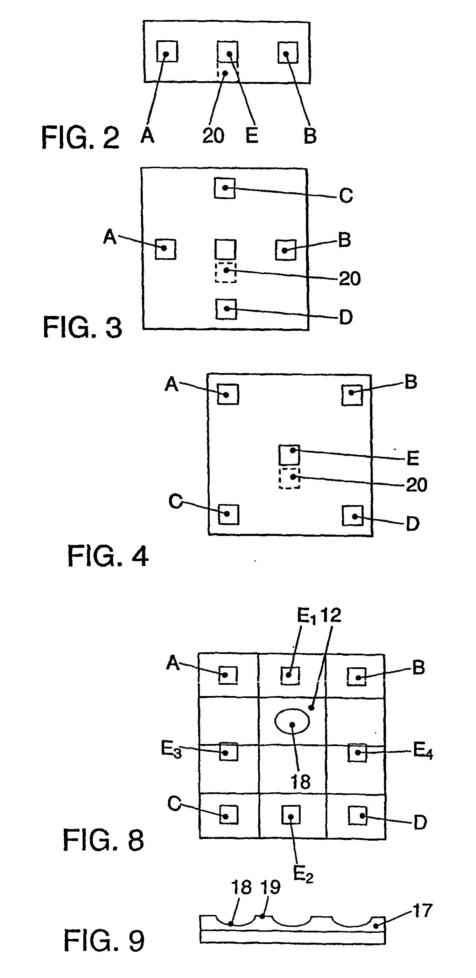

Die Position z.B. eines Fingers auf einer gegebenen Oberfläche lässt sich am einfachsten durch zwei getrennte Sensorelemente bestimmen, die z.B., wie in Figur 3 dargestellt, kreuzartig angeordnet sind. Ein Sensorelement mit den Sendern A,B bestimmt die horizontale Position, das andere Elemente mit den Sendern C,D die vertikale Position. Vorteithafterweise sind die Sensorelemente unterhalb einer Fläche 12 angeordnet und strahlen in Richtung des Betätigungselements, z.B. des Objekts O z.B. in Form eines Fingers ab. Die aus dem reflektierten Licht ermittelten Messwerte ergeben dann jeweils die horizontale oder vertikale Position des Objekts außerhalb der Bedienoberfläche. In Figur 1 wird für eine eindimensionale Positionserfassung das Prinzip erläutert. Die Sender A,B sind z.B. LEDs, der Empfänger E ist z.B. eine Photodiode oder eine entsprechend beschaltete Leuchtdiode. Die Sender A,B werden über den Invertierer 21 invertiert angesteuert. Sie werden dabei so in ihrer Leistung über die Regelwiderstände R1,R2 geregelt, das am Empfänger E ein Gleichlichtanteil ohne taktsynchronen Wechselanteil ansteht. Im Gegensatz zur EP 706 648 A1 wird jedoch das Leistungsverhältnis der Sendeelemente nicht bewusst zeitverzögert sondern so schnell wie möglich nachgeregelt. Dadurch wird eine sofortige Reaktion der Regelspannungskorrektur für die Sendeleistung der Sendeelemente bei einer Positionsänderung des Betätigungselements, z.B. des Objekts O erreicht.

In der EP 706 648 A1 werden nur dynamische Änderungen der Regelspannung ausgewertet. Im Gegensatz dazu wird bei der Positionsbestimmung der statische Regelwert benötigt. Um diesen Wert möglichst unabhängig von thermischen Einflüssen oder Alterungseinflüssen zu erhalten, wird die den einzelnen Regelwiderständen R1 und R2 zugeführte Regelspannung U_{R,1},U_{R,2} zur Einstellung der Ausgangsleistung abgegriffen und mit dem Vergleicher V III verglichen. Der über den Vergleicher V III ermittelte Wert stellt den elektrischen Wert der mechanischen Position des Betätigungselements, z.B. des Fingers in x-Richtung dar. Das vom Empfänger E ermittelte Signal wird einem Hochpass 23 zugeführt und mittels eines Synchrondemodulators 22 und anschließendem Vergleichen im Vergleicher V II taktweise verglichen. Bei Vorhandensein eines Objekts O ergibt sich damit im Vergleicher V I ein Wert für die Regelspannung, die den Regelwidersiänden R1, R2 zugeführt wird.

Ohne die Anwesenheit des Objekts O wird die parasitäre Reflexion PR bei entsprechendem Aufbau ungefähr gleiche Anteile der Sendeleistung von A und B wechselseitig zum Empfänger E streuen. Dabei bleibt die Regelspannung nahezu unbeeinflusst, also bei Null. Bei Annäherung eines Fingers unsymmetrisch zur Mitte, versucht die Regelschleife die Lichtleistung so einzustellen, dass am Empfänger E wieder ein Gleichtlichtsignal ohne Wechsellichtanteile ansteht Dies führt zu einer Verschiebung der Regetspannungssymmetrie an den Regelwiderständen R1,R2 und somit auch zu einem Ausgangssignal am Vergleicher VIII je nach Positionierung des Fingers nach rechts oder links vom Mittelpunkt der mechanischen Anordnung. Das Ausgangssignal nimmt mehr oder weniger positive bzw. negative Werte an, wie dies in Figur 1 rechts unten bei Bewegung eines Fingers verdeutlicht ist.

Durch eine entsprechende Anordnung und Auswahl der optischen Elemente kann eine ausreichend gute Linearität des Ausgangssignals im Verhältnis zur Position des Betätigungselements, z.B. des Fingers, auf der optisch relevanten Strecke erreicht werden.

Die in Figur 2 dargestellte Messstrecke, die auch in Figur 1 verwendet wurde, kann selbstverständlich nur eine eindimensionale Funktion erfüllen, z.B. als optischer Schieberegler oder Schiebeschalter, wobei z.B. nur die laterale Positionsänderung eines Fingers erfasst wird. Zur zweidimensionalen Erfassung der Position benötigt man gemäß Figur 3 zwei getrennte Messstrecken, die möglichst um 90° zueinander versetzt sind. Der Empfänger E kann für beide Messstrecken also A,B und C,D gemeinsam genutzt werden. In diesem Fall wird abwechselnd die Lichtstrecke in x-Richtung und die Lichtstrecke in y-Richtung wechselseitig getaktet. Dies kann durch Umschalten nach jeweils mehreren Taktperioden z.B. 30 x A/B, danach 30 x C/D geschehen oder durch Umschalten nach jedem Taktzyklus. Wichtig ist nur, dass die Messwertausgabe den jeweiligen Taktzyklen entsprechend zugeordnet wird.

Im einfachsten Fall der Anordnung der optischen Elemente zur Positionsbestimmung ergibt sich eine kreuzförmige Form. Bei entsprechender Größe der Bedienoberfläche kann sich jedoch eine Unlinearität in den Eckbereichen einstellen. Dies kann zwar einfach über entsprechende Rechenoperationen korrigiert werden, durch eine entsprechende Anordnung der Sendeelemente kann aber auch ohne Rechenoperation eine gute Linearität erreicht werden, wenn z.B. die Sender gemäß Figur 4 angeordnet werden. Während jedes Taktzyklus leuchten nun mehr als ein Sender, z.B. im ersten Zyklus die Sender A,C alternierend mit B,D zur horizontalen Positionsbestimmung, im weiteren Taktzyklus die Sender A,B alternierend mit C,D für die y-Positionsbestimmung auf. Die Anzahl der Leuchtdioden kann in Figur 4 natürlich auch entsprechend erhöht werden, z.B. für eine großflächige Nutzung dieser Funktion. Die Anordnungen der Fig. 3 und 4 lassen sich insofern auch lediglich zur Bestimmung der Position in x- und y- Richtung verwenden.

Zur Erfassung der dritten Dimension ist bei flacher Anordnung der Fläche 12 die Position des Objekts im Verhältnis zur Fläche 12 zu bestimmen. Diese Position sollte unabhängig von der Farbe des Fingers bzw. Objekts O sein. Geht man von einer nahezu flachen Anordnung der optischen Elemente aus, also davon, dass keine Sender oder Empfänger nach oben aus der Fläche 12 herausragen, kann die Bestimmung der Position des Objekts O im Wesentlichen nur durch Reflexion R erfolgen. Da zumindest aber die Reflexionseigenschaften des Objekts O die Messwerte beeinflussen, würden verschieden reflektierende Gegenstände in verschiedenen Abständen d von der Fläche 12 gleiche Reflexionswerte ergeben, so dass eine genaue Positionsbestimmung in der dritten Dimension nicht eindeutig wäre. Grundsätzlich ist die Bestimmung einer Funktion der dritten Dimension sinnvoll ausgehend von der mechanischen Berührungsebene, also von der Oberfläche der Fläche 12, und diese Funktion sollte dann nahezu unabhängig von Größe, Farbe oder Art des Objekts sein. An dieser Stelle ist aber auch darauf hinzuweisen, dass nach der Erfindung eine physische Berührungsebene nicht zwingend existieren muss. Die "Fläche" 12 kann auch imaginär in der Luft sein, so dass das Betätigungselement in die Fläche eintaucht, diese durchdringt und zum Teil die Empfänger sogar beschattet.

Zur Bestimmung der Positionserfassung in der dritten Dimension wird zu den beiden Taktzyklen zur Bestimmung des x-Wertes und des y-Wertes der Lage des Betätigungselements auf der Fläche 12 noch mindestens ein weiterer Taktzyklus hinzugefügt. In diesem Taktzyklus werden die Sender A-D so angesteuert, dass sie alle oder zumindest ein Teil davon das gleiche Taktsignal erhalten, also gleichzeitig leuchten. Hierbei ist es nicht erforderlich, dass sie einzeln geregelt werden, wie es zur Positionsbestimmung in x- und y-Richtung notwendig ist. Weiterhin wird mindestens eine weitere Lichtquelle 20 als Kompensationsmittel in der Nähe des oder der Empfänger E,E1-E4 so angeordnet, dass das von dieser weiteren Lichtquelle abgestrahlte Ucht nahezu ausschließlich in die Empfänger einstrahlt. Spielt Fremdlicht keine Rolle, kann jedoch auf diese Kompensationsmittel verzichtet werden.

Aus der älteren deutschen Patentanmeldung 100 01 955.2 ist die Anordnung von zwei Lichtquellen dergestalt bekannt, dass eine Annäherung eines Objekts und das Bewegungsmuster beim Antippen der Bedienoberfläche deutlich erkannt wird. Diese Anordnung wird grundsätzlich auch hier zur Erkennung des Antipp-Signals verwendet, jedoch werden anstelle der einen nach außen strahlenden Lichtquelle nun mehrere, vorzugsweise alle Sender und bedarfsweise auch Empfänger zur Abstrahlung nach außen verwendet. Ziel ist eine möglichst gleichmäßige Ausleuchtung des Raums oberhalb der Fläche 12.

Nähert sich das Objekt O der Fläche 12, wird dies durch Erkennungsmittel 14 erkannt und kann z.B. die Positionsbestimmung in x- und y-Richtung aktivieren. Beim Antippen der Fläche 12 wird die Geschwindigkeitsänderung von den Erkennungsmitteln erkannt und kann als Antippsignal AS1 in Figur 7 weitergeleitet werden. Dieses Signal kann z.B. ein Bedienelement 30 wie z.B. einen Cursor auf dem Bildschirm aktivieren. Gleichzeitig mit Auftreten des Antippsignals AS1 wird gemäß Fig. 7 ein vom Wert des 3D-Signals 3-D-S abgeleiteter Wert in einem Speicher 13 wie z.B. einem digitalen Speicher gespeichert. Dieser Wert dient als Referenzwert Ref_{3D} für die maximale Annäherung des Objekts O. Er soll sicherstellen, dass nicht kleinste Bewegungen des Betätigungselements oder Fingers bereits wieder als ein Abheben bewertet werden. Da beim Antippen der Fläche 12 mit einem Objekt O, wie z.B. einem Finger, dieser möglicherweise etwas verformt wird, könnte der maximale Wert der Reflexion R, wenn er in diesem Augenblick erfasst wird, durchaus höher sein wie der Wert bei locker aufgelegtem Finger. Daher wird der Wert kurz vor dem Berühren der Fläche 12 abgespeichert Eine Funktion der dritten Dimension erfolgt damit erst dann, wenn der Finger z.B. mehr als einen Millimeter von der Oberfläche entfernt wird. Dies erhöht die Bediensicherheit, insbesondere wenn der Finger während der Bewegung über die Fläche mit unterschiedlichem Druck bewegt bzw. etwas gerollt wird. Es wird also das Bewegungsmuster beim Antippen der Fläche erkannt, wobei vorzugsweise ein Referenzwert ermittelt wird, der dem Wert des jeweiligen Betätigungselements, also des Objekts beim Anliegen an der Bedienoberfläche bzw. kurz vor dem Anliegen entspricht. In Abhängigkeit von diesem Referenzwert kann dann die Bedienung in der dritten Dimension erfolgen. Wird dabei ein bestimmter Schwellwert unterschritten, hat sich das Betätigungselement so weit von der Bedienoberfläche entfernt, dass dies als ein Ausschaltsignal und damit Löschsignal für den Referenzwert angesehen wird.

Die Erfassung des Messwerts Ref_{3D} kann über eine Verzögerungsschaltung mittels der Schaltung 24 erfasst werden, oder es kann auch ein bestimmter vorgegebener Wert von Ref_{3D} abgezogen werden. Zur Bestimmung dieses Werts, der allerdings auch bereits der tatsächliche Maximalwert bei maximaler Annäherung sein kann, kann zunächst der erfasste Wert mit einem festen Multiplikator kleiner 1 multipliziert werden. Im Ausführungsbeispiel wird jedoch in Fig. 7 rechts unten dargestellte Schaltung verwendet. Während in den Speichern 38 und 39 die x- und y-Werte anliegen, liegt im Speicher 40 der z-Wert an. Dieser z-Wert wird über eine Tip-Pulserkennung 41 geleitet, die den Flip-Flop 42 setzt. Wird durch eine ungewollte Bewegung der z-Wert versehentlich gesetzt, wird dies über die Schwellwerterfassung 43 erfasst und der Flip-Flop 42 zurückgesetzt, bevor der über die Zeit verzögernde Schaltung 44 geleitete Wert das Flip-Flop 26 setzt, das dann dem Speicher 13 mitteilt, dass der jetzt anstehende Spannungswert als Referenzwert Ref_{3D} verwendet wird. Diese Ausführungsform hat den Vorteil, dass der Referenzwert Ref_{3D} an den Faktor Mensch angepasst ist. Ist nämlich die vorherige Bewegung - bei einem eher hektischen Benutzer - schnell erfolgt, entsteht ein größerer Abstand zwischen dem Maximalwert und dem Referenzwert als bei einem eher bedächtig sich der Vorrichtung nähemdem Benutzer.

Jede Bewegung weg von der Fläche 12 führt zu einer Veränderung der Regelspannung U_{R3D}. Die Differenz zwischen dem gespeicherten Wert Ref_{3D} und der aktuellen Regelspannung U_{R3D} ergibt somit das analoge Ausgangssignal S2 3D. Das Signal S2 3D ist proportional zum Abstand des Objekts O von der Fläche 12. Die Erkennungsmittel 14 erfassen über einen Vergleicher die unmittelbar in den Empfänger eingestrahlte Strahlung in der zur Kompensation vorgesehenen weiteren Lichtquelle 20 sowie die reflektierte Strahlung, wobei die Ansteuerung gemäß der Taktverteilung erfolgt. Wie aus der älteren Patentanmeldung 100 01 955.2 bekannt, wird das erste Signal zunächst über eine Schaltung 24 um einen vorgegebenen Zeitbetrag verzögert, bevor es dann im beispielsweise digitalen Speicher 13 gespeichert wird. Weitere Werte werden dann mit diesem Referenzwert im Vergleichsmittel 15 verglichen.

In vielen Fällen wird es sinnvoll sein, nicht nur das Antippen der Fläche 12 zu erkennen, sondern auch, wenn sich der Finger z.B. um mehr als 30 mm von der Fläche entfernt hat. Dazu wird mit einer weitere Schwellwertdetektion im Rahmen des Vergleichers 16 gearbeitet. Wird der Schwellwert SW2 unterschritten, wird das Flip-Flop 26 zurückgesetzt und der Referenzwert Ref_{3D} gelöscht und das Steuersignal AS1 zurückgesetzt. Auch der Schwellwert SW2 kann ein vom Referenzwert Ref_{3D} abgeleiteter Wert sein.

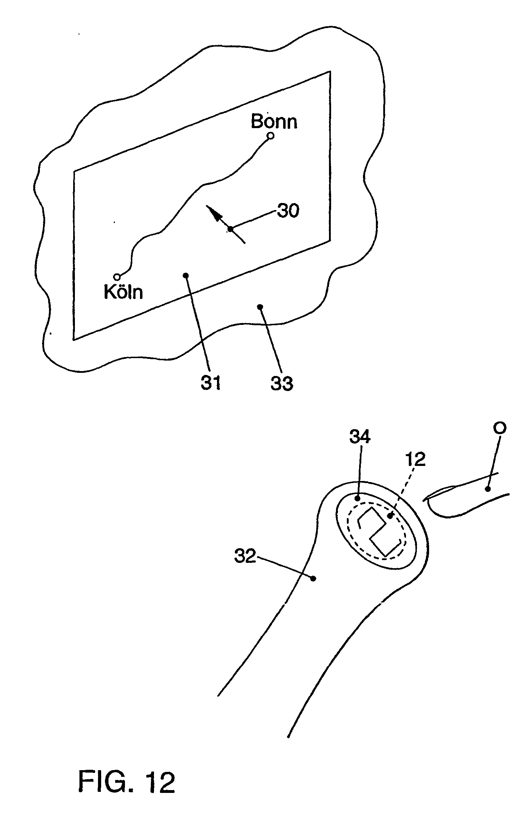

Ein Ausführungsbeispiel für eine derartige Vorrichtung zeigt Fig. 12. Es handelt sich dabei um die Teile eines Fahrzeugs 33 und zwar einen Schalthebel 33 oder Gangwahlhebel, an dem - hier oben am Hebel - eine optische Anzeige 34 zur Anzeige des eingelegten Ganges angeordnet ist. Das Fahrzeug besitzt ferner ein Navigationssystem 31, das vom Schalthebel 32 aus steuerbar ist. Hierzu ist die Anzeige 34 zugleich als Fläche 12 einer bewegungssensitiven Bedienoberfläche ausgebildet, die z.B. mit dem Navigationssystem verbunden ist. So lässt sich z.B. die Detaitvergrößerung im Bereich des Bedienelements 30 oder des Cursors im Navigationssystem 31 durch leichtes Abheben des Betätigungselements, z.B. des Fingers oder Objekts O von der Bedienoberfläche steuern. Vorteilhafterweise kann gleichzeitig der gezoomte Ausschnitt durch Bewegung des Fingers entsprechend bewegt werden. Ist z.B. im Sichtbereich des Fahrers die Anzeige des Navigationssystems 31 angeordnet, so muss der Fahrer zur Wegsuche z.B. nur den Finger über die Fläche 12 bewegen oder die Fingerkuppe abrollen. Zur Ausschnittsvergrößerung der Karte des Navigationssystems 31 hebt er den Finger ab, ohne die Hand vom Schalthebel 32 nehmen zu müssen und ohne weitere Bedienelemente betätigen zu müssen. Die Gefahr der Ablenkung des Fahrers ist deutlich verringert. Die Fläche 12 kann so klein sein, dass der Finger zur Bedienung des Bedienelements 30 im Wesentlichen nicht mehr bewegt oder verschoben, sondern abgerollt wird. In diesem Fall kann die Bedienoberfläche z.B. nicht wesentlich größer als eine Fingerkuppe sein. Die im Verhältnis zur Berührungsfläche des Objekts O etwa gleich große Fläche 12 kann rund und gewölbt sein. Selbstverständlich kann sie auch eine beliebige andere Form haben z.B. flach, nahezu rund. Bedarfsweise kann sie auch eine Struktur aufweisen, die das Ertasten des Mittelpunkts der Fläche erlaubt.

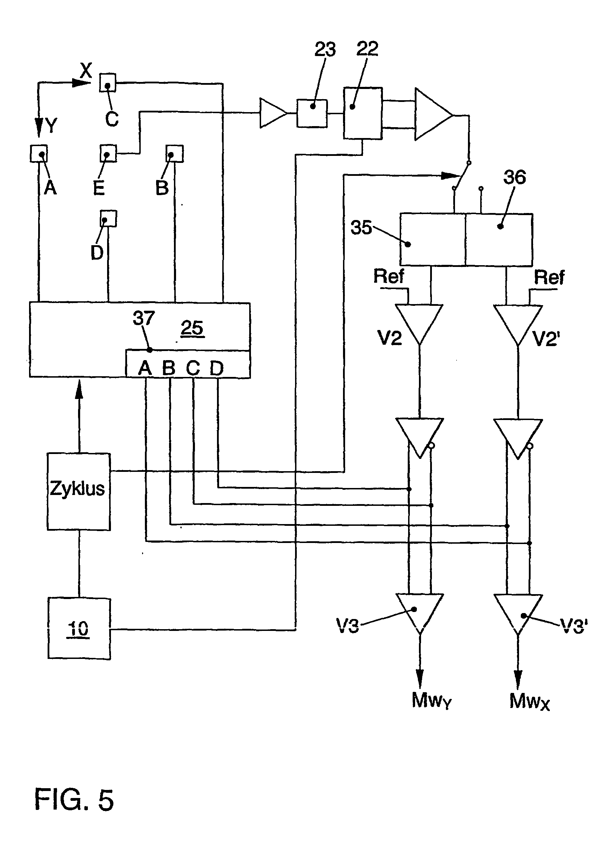

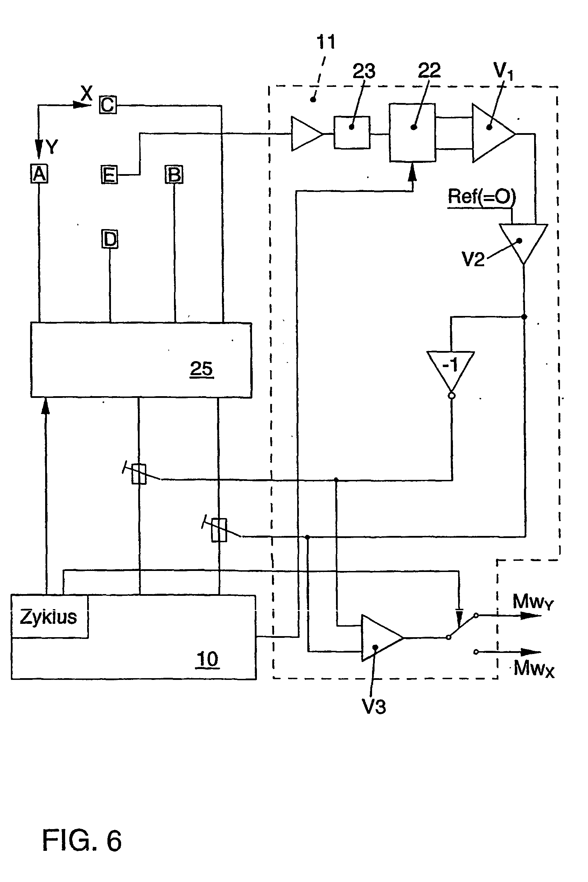

Eine zweidimensionale Schaltung, die analog zur eindimensionalen Schaltung gemäß Figur 1 aufgebaut ist, zeigen die. Figuren 5 und 6. Die Taktschaltung besitzt einen Taktverteiler 25, der nicht nur die jeweiligen Sender und Empfänger ansteuert, sondern zugleich auch die Leistungsregelungen 36 entsprechend ansteuert, so dass durch die Vergleicher V2,V2' und V3,V3' die entsprechenden Messwerte Mwₓ und Mw_{y} erfasst werden können.

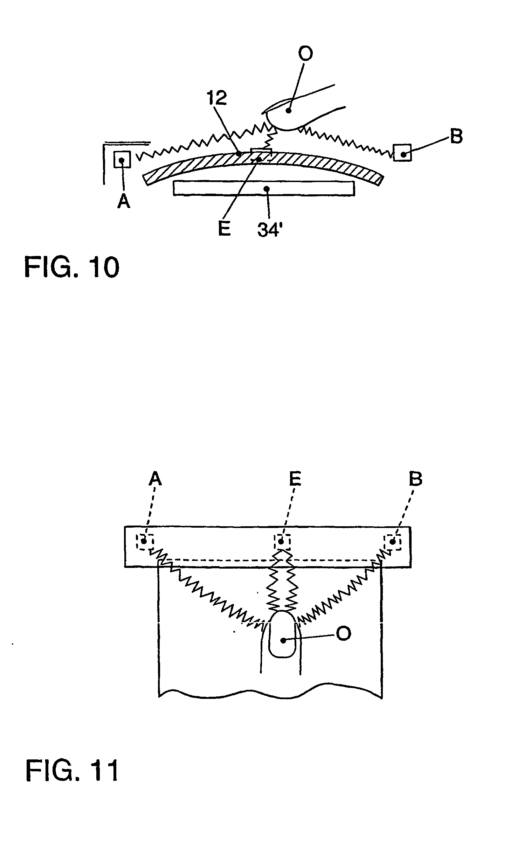

In manchen Fällen z.B. bei der Anwendung einer bewegungssensitiven Bedienoberfläche kann eine Anordnung des Empfängers E gemäß den Figuren 2 bis 4 störend sein, z.B. wenn die Fläche der bewegungssensitiven Bedienoberfläche nicht für die Wellenlänge der Positionserfassung durchlässig ist. Da die Bedienoberfläche aus transparentem Kunststoff bestehen kann, ist z.B. die Anordnung einer weiteren optischen Anzeigeeinheit ohne Sichtbeeinträchtigung möglich, wie dies eingangs bereits für die Anordnung einer Anzeige für den eingelegten Gang eines Fahrzeuge erläutert wurde. Ist diese weitere Anzeigeeinheit undurchlässig für die für die bewegungssensitive Bedienoberfläche vorgesehene Wellenlänge, kann der Empfänger E nicht in der Mitte der Fläche angeordnet werden, sondern muss z.B. am Rand angeordnet sein. Gemäß Figur 8 können mehrere Empfänger auch so angeordnet werden, dass sie zusammen mit den Sendern A-D jeweils eine oder mehrere Lichtstrecken bilden. So können die Sender A,C mit den Empfängern E2 bzw. E4 alternierend mit den Sendern B,D und den Empfängern E1 bzw. E4 eine Licht- bzw. Messstrecke zur Bestimmung des x-Wertes bilden. Es ist auch eine Anordnung denkbar, bei der die Sender A,C alternierend mit den Sendern B,D und den Empfängern E3,E4 betrieben werden. Die Anzahl und Anordnung der Empfangselemente geht lediglich auf die Symmetrie des Ausgangssignals für den x-Wert und den y-Wert sowie den 3D-Wert ein. Grundsätzlich gilt, dass mehrere oder alle, aber wenigstens ein Empfänger E1-E4 das von den Sendern A-D ausgesandte Signal empfangen. Mit wenigen Bauelementen ist es möglich, Empfangselemente nicht nur mittig zwischen den Sendern anzuordnen, sondern auch am Rand der Bedienoberfläche.

Da eine Leuchtdiode, wie sie zur Aussendung des Lichts hier verwendet wird, in der Regel auch als Empfänger beschaltet werden kann, können bei Verwendung von Leuchtdioden als Empfänger E1-E4 diese natürlich zeitweise auch als Sender betrieben werden. Dies kann dann zu einer Anordnung führen, bei der zur Positionsbestimmung des x-Werts z.B. die Sender A,C gemeinsam mit dem Empfänger E3 alternierend zu den Sendern B,D gemeinsam mit dem Empfänger E4 leuchten, während die Empfänger E1 und E2 als Empfänger dienen. Eine entsprechende Anordnung ergibt sich dann zur Bestimmung des y-Werts.

Gemäß Figur 8 werden die Empfänger parallel geschaltet oder ihre Ausgangssignale mit entsprechenden Schaltungsanordnungen zusammengeführt. Da beide Empfänger E1,E2 bzw. E3,E4 nicht am gleichen Ort liegen, kann es vorkommen, dass ein Empfänger anderen Lichtverhältnissen ausgesetzt ist als der andere (Sonne und Schatten). Solange die Lichtverhältnisse stabil sind, wird sich die unsymmetrische Beleuchtung bei zufällig nicht genau symmetrischer Anordnung der Sendeelemente nur in einer zusätzlichen geringen Asymmetrie des Ausgangssignals der Fingerposition äußern. Störend äußerst sich dieser Effekt jedoch, wenn z.B. die bewegungssensitive Bedienoberfläche in sich ständig veränderten Hetligkeiten betrieben wird wie z.B. in einem fahrenden Auto.

Um diesen Effekt zu beseitigen, wird die Anordnung der Sende- und Empfangselemente in einer bewegungssensitiven Bedienoberfläche so betrieben, dass jeweils nur ein Empfänger pro Lichtstrecke eingesetzt wird. Nach Figur 8 wird zur Positionsbestimmung des x-Werts z.B. nur Empfänger E1 genutzt, wobei die Sender A bzw. A,C alternierend mit den Sendern B bzw. B,D leuchten. Bei einer großen Fläche kann dabei jedoch in der Zeichnung nur im oberen Bereich die Position eindeutig bestimmt werden. Daher wird in einem weiteren Messzyklus der Empfänger E2 genutzt, wobei die Sendeelemente C bzw. A,C alternierend mit den Sendern D bzw. D,B leuchten. In diesem zweiten Messzyklus kann nun die Position im unteren Teil der bewegungssensitiven Bedienoberfläche eindeutig bestimmt werden. Nun werden die Messwerte des ersten und zweiten Zyklus zusammengenommen und ergeben zusammen den fremdlichtunabhängigen Messwert für den x-Wert des Objekts O. Bei dieser Anordnung werden also nacheinander jeweils zwei Messwerte für die x-Richtung und zwei Messwerte für die y-Richtung erzeugt, die anschließend gemittelt werden. Die Bestimmung des y-Werts erfolgt analog dazu.

Eine weitere Alternative zur Verwendung nur eines Empfängers E1-E4 besteht in der unterschiedlich gewichteten Ansteuerung der Sender. In Figur 8 wird z.B. zur Bestimmung des x-Werts nur Empfänger E1 eingesetzt. Die dem Empfänger am nächsten liegenden Sender, also die Sender A,B würden mit entsprechend verringerter Leistung angesteuert, z.B. mit 30% ihrer maximalen Leistung. Die am weitesten entfernt liegenden Sendeelemente, also die Sender C,D senden dann mit ihrer maximalen Leistung von 100%. Werden die Empfänger E3,E4 auch als Sender betrieben, so strahlen sie z.B. mit 70%. Durch die gewichtete Ansteuerung wird ein nahezu lineares Verhalten des elektrischen Positionssignals im Verhältnis zur tatsächlichen mechanischen Position des Objekts O erreicht. Natürlich kann auf all diese Maßnahmen auch verzichtet werden, wenn über entsprechende Rechenoperationen zu jedem gemessenen x- und y-Wert ein entsprechend korrigierter Ausgangswert ausgegeben wird. Dies ist vor allem bei großflächigen Anwendungen von Vorteil. Diese Anordnung kann auch zur nur zweidimensionalen Positionsbestimmung in x- und y- Richtung verwendet werden.

Auf die Kompensation des Empfangssignals zu Null kann bei der Bestimmung der dritten Dimension verzichtet werden, wenn z.B. nur durch Wegbewegung des Fingers in eine weitere Bedienebene geschaltet wird. Die hierbei auftretende Fremdlichtempfindlichkeit wirkt sich bei einer geringen Anzahl von fest zugeordneten Funktionen in der dritten Dimension kaum aus, z.B. wenn durch Anheben des Fingers oder Betätigungselements nur in eine zweite Bedienebene geschaltet wird.

Figur 8 zeigt eine weitere Alternative, wenn z.B. bei einer bewegungssensitiven Bedienoberfläche nur eine beschränkte Anzahl von Positionszuordnungen sinnvoll ist, wie dies z.B. bei einem 12-feldrigen Tastaturfeld möglich ist Auf die Darstellung der gegebenenfalls erforderlichen Kompensationsmittel in Form der weiteren Lichtquellen 20 wurde verzichtet. Aufgedruckte Felder mit den Nummern können leicht zu Fehlbedienungen führen, wenn das Objekt die Taste nicht erfühlen kann und zufällig zwischen zwei Feldern landet. Um diesen Missstand zu beseitigen, kann die Oberfläche 19 der bewegungssensitiven Bedienoberfläche versenkte oder erhabene oder sonstwie fühlbare translucente Kennfelder 18 mit dazwischen liegenden, für die Strahlung undurchlässigen Bereichen aufweisen. Das Antippen einer Tastenfläche, also eines Kennfeldes 18, führt dann zu einem Antippsignal mit gleichzeitiger Information im Hinblick auf den x- und den y-Wert. Wird mit Eintreffen des Antippsignals gleichzeitig die Position erkannt, kann diesem Messwert zuzüglich einem bestimmten Toleranzbereich eine entsprechende Zahl oder Funktion eindeutig zugeordnet werden. Dabei wird ein entscheidender Vorteil gegenüber mechanischen Tastaturen erreicht, da im Idealfall die Tastatur bei einer Ausführungsform gemäß Figur 2 oder 3 mit nur drei bis vier preiswerten LEDs und einem Empfänger, der eine Photodiode, vorzugsweise aber ebenfalls eine LED sein kann, betrieben werden kann, die die Beleuchtung und gleichzeitig die Tastenfunktion übernehmen können. Diese Kennfeld- und Sektorfunktion ist auch ohne die Abstandsbestimmung für sich verwendbar, wenn eine lediglich zweidimensionale Anwendung gewünscht ist, wenn es also zB. nur auf die Erkennung der Kennfelder ankommt Der Bedienoberfläche kann auch eine teilweise opake Beschichtung oder Abdeckung zugeordnet sein, so dass sich eindeutige Kennfelder selbst mit nur 3 bis 4 LEDs und einem Empfänger, der eine Photodiode oder eine Leuchtdiode sein kann, erkennen lassen.

Im Idealfall reichen vier LEDs aus, je eine in jedem Eckbereich der dann viereckigen Fläche, wenn z.B. gemäß Fig. 4 die Sender A und C abwechselnd getaktet werden und die Sender B bzw. D als LEDs alternierend als Empfänger eingesetzt werden. Die alternierend gewonnenen Empfangssignale der Sender B bzw. D (hier: Empfänger) bzw. die Regetgrößen werden zusgmmengefasst und ergeben einen ersten Messwert der y-Richitung. Zur Verbesserung der Linearität bzw. zur Optimierung des Messergebnisses kann alternierend zur Messstrecke A/C mit den Sendern B bzw. D als Empfängern die Messstrecke B/D mit den Sendern A bzw. C als Empfängern geschaltet werden. Die jeweils alternierend gewonnenen Messergebnisse werden wieder zusammengeführt und ergeben einen linearisierten, vollkommen fremdlichtunabhängigen Messwert der y-Achse. Gleiches wird analog für die x-Achse wiederholt

Zum Erhalt des z-Wertes der dritten Dimension werden die Sender A und C gleichzeitig getaktet, während der Sender B als Empfänger und der Sender D als Kompensations-LED (sinngemäß Lichtquelle 20) betrieben werden. Zur Verbesserung der Linearität kann alternierend zur Messstrecke A und C (gleichzeitig getaktet) der Sender D als Empfänger und der Sender B als Kompensations-LED (sinngemäß Lichtquelle 20), also die Sender B und D in ihrer Funktion gegenüber der ersten Beschattung vertauscht, betrieben werden. Die aus diesen beiden Messungen gewonnenen Werte bzw. Regelgrößen werden zusammengefasst und ergeben einen ersten z-Wert. Analog dazu werden alternierend die Sender B und D (gleichzeitig getaktet) mit den Sendern A und C wechselweise einmal als Empfänger und einmal als Kompensations-LED zur Bestimmung eines zweiten z-Werts betrieben. Zur Bestimmung eines dritten und vierten z-Werts gilt das gleiche analog bei Verwendung der Sender A und B bzw. C und D als gleichzeitig getaktete Sender und den jeweils anderen beiden Sendern betrieben als Empfänger bzw. Kompensations-LED. Nutzt man alle vier z-Werte, so kann in wenigen Mikrosekunden eine derartige Schaltabfolge sinngemäß reihum erfolgen, wobei jeder Sender abschnittsweise nicht nur als Sender sondern auch als Empfänger bzw. Kompensations-LED betrieben wird. Bei entsprechender Auswertung der insgesamt gewonnenen Messwerte lassen sich aus der oben beschriebenen Anordnung die x-, y- und z-Position aus nur einem Umlauf errechnen, indem entsprechende Ergebnisse miteinander verrechnet werden. Kommt es auf die Bestimmung des z-Wertes in der dritten Dimension nicht an, kann auch diese Anordnung für sich zur Bestimmung der x- und y- Position eingesetzt werden.

Weiterhin kann eine Annäherungsfunktion erreicht werden, bei der das Objekt z.B. erkannt wird, wenn es sich auf oder einige Zentimeter oder Millimeter oberhalb eines Kennfelds 18 befindet Dies kann bein blinden Bedienen z.B. zum Einschalten der Beleuchtung oder zur akustischen Rückmeldung verwendet werden, auf welcher Taste der Finger sich gerade befindet, wenn zB. im Auto bei Dunkelheit ein Funktion gewählt wird, ohne dass die Tastatur gesehen werden kann. Wird dann das entsprechende Kennfeld 18 angetippt, wird mit den gleichen Mitteln eine weitere Funktion ausgelöst. Eine derartige Tastatur beinhaltet keine Mechanik, die Leuchtdioden können auf einer vorhandenen Elektronikplatine mit integriert werden und benötigen nur den Tasten entsprechend translucente Bereiche. Dies reduziert Fertigungskosten sowie Fehlermöglichkeiten bei gleichzeitiger Unempfindlichkeit gegenüber Wasser bzw. Sand oder Staub. Bedarfsweise kann das Tastaturfeld mit 12 Tasten auch weggeklappt werden und es entsteht selbst eine bewegungssensitive Bedienoberfläche z.B. zur Eingabe einer gesamten groben Fahrtroute mit dem Finger. Der Benutzer kann so z. B auf der Karte die gewünschten Stationen und die Strecke mit dem Finger grob abfahre und das Navigationssystem berechnet daraus einen Routenvorschlag.

Gemäß Fig. 10, 11 ist es nicht zwingend erforderlich, dass Sender A,B und Empfänger E unterhalb der Fläche 12 angeordnet sind. Befindet sich dort z.B. eine Anzeige 34' oder ein anderes Bauelement, das nicht zugleich auch durchstrahlt werden kann, können die Sender und/oder Empfänger auch oberhalb der Fläche angeordnet sein. Trennendes Medium ist dann nicht die Fläche 12 sondern Luft oder ein anderes Medium. Die Sender und Empfänger können durch ein Abdeckung 41 geschützt sein und lediglich durch einen Spalt zwischen Fläche 12 und Abdeckung 41 Strahlung aussenden und empfangen bzw. durch eine entsprechende, bedarfsweise abgewinkelte Lichtwellenleiteinrichtung an der Bedienoberfläche ausgekoppelt werden.

Grundsätzlich kann die Erfassung der x- und y- Werte auch mit Einsatz der Kompensationsmittel in Form der weiteren Lichtquelle 20 und die Erfassung des z-Wertes auch ohne Kompensation erfolgen.

Praxisversuche haben gezeigt, dass sich diese optoelektronische Positionserfassung trotz der komplexen Schaltungsabfolge problemlos realisieren lässt. Die einzelnen Messstrecken können in Mikrosekunden betrieben werden, so dass eine zuverlässige und günstige Positionserfassung möglich ist.

### Liste der Bezugszeichen (kein Bestandteil der Anmeldeunterlagen)

- 10: Oszillator
- 11: Auwerteeinrichtung
- 12: Fläche
- 13: Speicher für Antippsignal
- 14: Erkennungsmittel
- 15: Vergleichsmittel
- 16: Vergleicher
- 17: Material
- 18: Kennfeld
- 19: Oberfläche
- 20: weitere Lichtquelle
- 21: Invertierer
- 22: Synchrondemodulator
- 23: Hochpass
- 24: Schaltung zur Zeitverzögerung
- 25: Taktverteiler
- 26: Flip Flop
- 30: Bedienelement
- 31: Navigationssystem
- 32: Schalthebel
- 33: Fahrzeug
- 34, 34': Anzeige
- 35,36: Speicher
- 37: Leistungsregelung
- 38,39,40: Speicher
- 41: Tip-Pulserkennung
- 42: Flip-Flop
- 43: Schwellwerterfassung
- 44: Zeit verzögernde Schaltung
- A-D: Sender
- E,E1-E4: Empfänger
- O: Objekt
- d: Entfernung
- AS1: Antippsignal
- Ref_{3D}: Referenzwert
- S2 3D: Entfemungswert
- Mwₓ: Messwert x
- Mw_{y}: Messwert y
- VI-VIII: Vergleicher
- V1-V3: Vergleicher
- V2', V3': Vergleicher

## Patentansprüche

1. Optoelektronische Vorrichtung zur Erfassung der Position und/oder Bewegung eines Objekts (O) mit
- mehreren Sendern (A,B,C,D) zur Aussendung von Strahlung, insbesondere Lichtstrahlung,
- wenigstens einem Empfänger (E,E1,E2,E3,E4) zum Empfang der von den Sendern (A-D) ausgesandten und vom Objekt (O) rückgestrahlten Strahlung bzw. vom dem Objekt zugeordneten Sendern abgestrahlten Strahlung,
- mehreren voneinander verschiedenen Strahlungsstrecken, die zwischen wenigstens einem Teil der Sender (A-D), dem Objekt (O) und den Empfängern (E,E1-E4) bzw. zwischen dem Objekt zugeordneten Sendern und den Empfängern gebildet sind,
- einer Taktschaltung zur taktweisen Schaltung der Sender (A-D) der verschiedenen Strahlungsstrecken,
- einer Auswerteeinrichtung (11), die die von den Empfängern (E,E1-E4) für die verschiedenen Strahlungsstrecken empfangenen Signale in Werte (x,y) zur Erfassung der Position und/oder der Bewegung des Objekts (O) entlang einer Linie oder in einer Fläche (12) umsetzt, wobei
zur dreidimensionalen Erfassung der Position und/oder Bewegung des Objekts (O) die Taktschaltung mehrere, wenigstens jedoch einen Teil der Sender (A-D) und/oder Empfänger (E,E1-E4) in wenigstens einem weiteren Takt so schaltet, wobei der Raum, in den die Sender (A-D) einstrahlen, weitestgehend gleichmäßig ausgeleuchtet ist, und wobei Auswerteeinrichtung (11) aufgrund der vom Objekt (O) während des weiteren Takts zurück- bzw. abgestrahlten Strahlung einen Wert zur Bestimmung der Entfernung (d) des Objekts (O) von der Linie oder Fläche (12) bestimmt

2. Vorrichtung nach Anspruch 1, **dadurch gekennzeichnet, dass** die Empfänger (A-D) und die Sender (E,E1-E4) in einer Ebene liegen und/oder unter einer die Fläche (12) bildenden Bedienoberfläche angeordnet sind und in dem weiteren Takt in den Raum jenseits der Bedienoberfläche einstrahlen.

3. Vorrichtung nach einem der Ansprüche 1 oder 2, **dadurch gekennzeichnet, dass** wenigstens vier Sender (A-D) kreuzartig angeordnet sind, die zur zweidimensionalen Erfassung wechselweise über Kreuz getaktet betrieben sind.

4. Vorrichtung nach einem der vorhergehenden Ansprüche, **dadurch gekennzeichnet, dass** eine weitere Lichtquelle (20) als Sender in der Nähe des wenigstens einen Empfängers (E,E1-E4) so angeordnet ist, dass das Licht der weiteren Lichtquelle (20) im wesentlichen in den Empfänger (E,E1-E4) einstrahlt.

5. Vorrichtung nach einem der vorhergehenden Ansprüche, **dadurch gekennzeichnet, dass** die als Strahtungsstrecken ausgebildeten Lichtstrecken wechselweise angesteuert sind und dass die Auswerteeinheit (11) die Leistung der Sender mit einer Leistungsregelung vorzugsweise unverzüglich so regelt, dass an den Empfängern (E,E1-E4) ein Gleichlichtanteil ohne taktsynchronen Wechsellichtanteil ansteht

6. Vorrichtung nach einem der vorhergehenden Ansprüche, **dadurch gekennzeichnet, dass** zur Positionsbeurteilung die Regelspannungen an den jeweiligen Sendern (A-D) zugeordneten Regelelementen (R₁,R ₂) abgegriffen und einem Vergleicher (V III) zur Bestimmung des Werts zugeführt werden.

7. Vorrichtung nach einem der vorhergehenden Ansprüche, **dadurch gekennzeichnet, dass** Erkennungsmittel (14) vorgesehen sind, die das Bewegungsmuster beim Antippen der Fläche (12) erkennen und dass Speicher den dabei ermittelten Wert an rückgestrahlter Strahlung als Referenzwert (Ref_{3D}) speichern.

8. Vorrichtung nach Anspruch 7, **dadurch gekennzeichnet, dass** Vergleichsmittel (15) vorgesehen sind, die die Entfernung (d) des Objekts (O) von der Fläche (12) durch einen Vergleich zwischen dem gespeicherten oder einem davon abgeleiteten Wert an rückgestrahlter Strahlung und dem aktuellen Wert bestimmen, wobei der abgeleitete Wert vorzugsweise der Wert ist, der kurz vor dem Auftreffen des Objekts (O) auf der Fläche (12) anliegt.

9. Vorrichtung nach einem der vorhergehenden Ansprüche, **dadurch gekennzeichnet, dass** die Vorrichtung die Annäherung des Objekts (O) erkennt und die Positionserfassung unter Veränderung der Taktzyklen wirksam schaltet

10. Vorrichtung nach einem der Ansprüche 7 bis 9, **dadurch gekennzeichnet, dass** der Speicher (13) den ermittelten Referenzwert (Ref_{3D}) speichert und wieder löscht, wenn ein Vergleicher (16) feststellt, dass der aktuelle Wert unter einem vorgegebenen Wert (SW2) bzw. einen vom Referenzwert abgeleiteten Wert fällt.

11. Vorrichtung nach einem der vorhergehenden Ansprüche, **dadurch gekennzeichnet, dass** die Sender (A-D) an den Ecken der Fläche (12) und die Empfänger (E1-E4) zwischen den Sendern angeordnet sind.

12. Vorrichtung nach Anspruch 11, **dadurch gekennzeichnet, dass** je zwei an benachbarten Ecken der Fläche (12) angeordnete Sender (A-D) gemeinsam mit dem zwischen ihnen liegenden Empfänger (E1-E4) eine Meßeinheit bilden und das die für die Bestimmung eines jeweiligen Werts in x- oder y-Richtung einander gegenüberliegenden Sender und Empfänger (A-E3-C, B-E4-D; A-E1-B, C-E2-D) wechselweise betrieben werden.

13. Vorrichtung nach einem der vorhergehenden Ansprüche, **dadurch gekennzeichnet, dass** zur Bestimmung eines x-Wertes oder eines y-Wertes der Position des Objekts (O) in der Fläche (12) zwei im Hinblick auf die Fläche einander gegenüberliegende Empfänger vorgesehen sind, die alternierend Messwerte liefern, die zur Bestimmung der Position gemittelt werden.

14. Vorrichtung nach einem der vorhergehenden Ansprüche, **dadurch gekennzeichnet, dass** in der Fläche (12) für die Strahlung der Sender eindeutig zuordenbare Kennfelder (18) gebildet sind und dass die Erkennungsmittel (14) bei Annäherung des Objekts (O) an das Kennfeld (18) das Objekt erkennen und je nach Kennfeld eine für das Kennfeld (18) charakteristische Kennung wiedergeben und beim gegebenenfalls erfolgenden Antippen eine weitere Funktion auslösen.

15. Vorrichtung nach einem der vorhergehenden Ansprüche, **dadurch gekennzeichnet, dass** Leuchtdioden (A-E) gleichzeitig die Fläche bzw. das Tastenfeld beleuchten und zumindest zeitweise als Empfänger und/oder Kompensationselement dienen.

16. Vorrichtung nach einem der vorhergehenden Ansprüche, **dadurch gekennzeichnet, dass** das Objekt (O) ein Körperteil, vorzugsweise ein Finger eines Benutzers ist und dass die Fläche (12) so klein ist, dass der Finger zur Bedienung eines Bedienelements (30) im Wesentlichen nicht verschoben, sondern abgerollt wird.

17. Vorrichtung nach einem der vorhergehenden Ansprüche, **dadurch gekennzeichnet, dass** die Sender (A,B) und Empfänger (E) oberhalb der Fläche (12) angeordnet sind oder über lichtleitende Elemente Licht oberhalb der Fläche (12) einstrahlen oder empfangen, wobei das die Sender (A,B), Empfänger (E) und das Objekt (O) trennende Medium Luft oder ein anders von der Strahlung durchstrahlbares Medium ist.

18. Verfahren zur optoelektronischen Erfassung der Position und/oder Bewegung eines Objekts (O) mit einer Vorrichtung mit
- mehreren Sendern (A,B,C,D) zur Aussendung von Strahlung, insbesondere Lichtstrahlung,
- wenigstens einem Empfänger (E,E1,E2,E3,E4) zum Empfang der von den Sendern (A-D) ausgesandten und vom Objekt (O) rückgestrahlten Strahlung bzw. von dem Objekt zugeordneten Sendern abgestrahlten Strahlung,
- mehreren voneinander verschiedenen Strahlungsstrecken, die zwischen wenigstens einem Teil der Sender (A-D), dem Objekt (O) und den Empfängern (E,E1-E4) bzw. zwischen dem Objekt zugeordneten Sendern und den Empfängern gebildet sind,
- einer Taktschaltung zur taktweisen Schaltung der Sender (A-D) der verschiedenen Strahlungsstrecken,
- einer Auswerteeinrichtung (11), die die von den Empfängern (E,E1-E4) für die verschiedenen Strahlungsstrecken empfangenen Signale in Werte (x,y) zur Erfassung der Position und/oder der Bewegung des Objekts (O) entlang einer Linie oder in einer Fläche (12) umsetzt, wobei
zur dreidimensionalen Erfassung der Position und/oder Bewegung des Objekts (O) die Taktschaltung mehrere, wenigstens jedoch einen Teil der Sender (A-D) und/oder Empfänger (E,E1-E4) in wenigstens einem weiteren Takt so schaltet, wobei der Raum, in den die Sender (A-D) einstrahlen, weitestgehend gleichmäßig ausgeleuchtet ist, und wobei die Auswerteeinrichtung (11) aufgrund der vom Objekt (O) während des weiteren Takts zurück bzw. abgestrahlten Strahlung einen Wert zur Bestimmung der Entfernung (d) des Objekts (O) von der Linie oder Fläche (12) bestimmt.

19. Verfahren nach Anspruch 18, **dadurch gekennzeichnet, dass** die unter einer die Fläche (12) bildenden Bedienoberfläche angeordnete Sender und/oder Empfänger in einem weiteren Takt in den Raum jenseits der Bedienoberfläche einstrahlen.

20. Verfahren nach Anspruch 18 oder 19, **dadurch gekennzeichnet, dass** wenigstens vier kreuzartig angeordnete Sender (A-D) zur zweidimensionalen Erfassung wechselweise über Kreuz getaktet betrieben sind.

21. Verfahren nach einem der Ansprüche 18 bis 20, **dadurch gekennzeichnet, dass** im weiteren Takt eine weitere Lichtquelle (20) als Sender in der Nähe des wenigstens einen Empfängers (E,E1-E4) zur Kompensation Licht im wesentlichen in den Empfänger (E,E1-E4) einstrahlt.

22. Verfahren nach einem der Ansprüche 18 bis 21, **dadurch gekennzeichnet, dass** die als Strahlungsstrecken ausgebildeten Lichtstrecken wechselweise angesteuert werden und dass die Auswerteeinheit (11) die Leistung der Sender mit einer Leistungsregelung (36) vorzugsweise unverzüglich so regelt, dass an den Empfängern (E,E1-E4) ein Gleichlichtanteil ohne taktsynchronen Wechsettichtanteil ansteht.

23. Verfahren nach einem der Ansprüche 18 bis 22, **dadurch gekennzeichnet, dass** zur Positionsbeurteilung die Regelspannungen an den jeweiligen Sendern (A-D) zugeordneten Regelelementen (R₁,R ₂) abgegriffen und einem Vergleicher (V III) zur Bestimmung des Werts zugeführt werden.

24. Verfahren nach einem der Ansprüche 18 bis 23, **dadurch gekennzeichnet, dass** Erkennungsmittel (14) das Bewegungsmuster beim Antippen der Fläche (12) erkennen und dass Speicher (13) den dabei ermittelten Wert an rückgestrahlter Strahlung als Referenzwert (Ref_{3D}) speichern.

25. Verfahren nach Anspruch 24, **dadurch gekennzeichnet, dass** Vergleichsmittel (15) die Entfernung (d) des Objekts (O) von der Fläche (12) durch einen vergleich zwischen dem gespeicherten oder einem davon abgeleiteten Wert an rückgestrahlter Strahlung und dem aktuellen Wert bestimmen, wobei als abgeleiteter Wert vorzugsweise der Wert verwendet wird, der kurz vor dem Auftreffen des Objekts (O) auf der Fläche (12) anliegt.

26. Verfahren nach einem der Ansprüche 18 bis 25, **dadurch gekennzeichnet, dass** das die Vorrichtung die Annäherung des Objekts (O) erkennt und die Positionserfassung unter Veränderung der Taktzyklen wirksam schaltet.

27. Verfahren nach einem der Ansprüche 24 bis 26, **dadurch gekennzeichnet, dass** der Speicher (13) den ermittelten Referenzwert (Ref_{3D}) speichert und wieder löscht, wenn ein Vergleicher (16) feststellt, dass der aktuelle Wert unter einem vorgegebenen Wert (SW2) oder einen vom Referenzwert abgeleiteten Wert fällt.

28. Verfahren nach einem der Ansprüche 18 bis 27, **dadurch gekennzeichnet, dass** je zwei an benachbarten Ecken der Fläche (12) angeordnete Sender (A-D) gemeinsam mit dem zwischen ihnen liegenden Empfänger (E1-E4) eine Meßeinheit bilden und das die für die Bestimmung eines jeweiligen Werts in x- oder y-Richtung einander gegenüberliegenden Sender und Empfänger (A-E3-C. B-E4-D; A-E1-B, C-E2-D) wechselweise betrieben werden (Fig. 8).

29. Verfahren nach einem der Ansprüche 18 bis 28, **dadurch gekennzeichnet, dass** zur Bestimmung eines x-Wertes oder eines y-Wertes der Position des Objekts (O) in der Fläche (12) zwei im Hinblick auf die Fläche einander gegenüberüegende Empfänger altemierend Messwerte liefem, die zur Bestimmung der Position gemittelt werden.

30. Verfahren nach einem der Ansprüche 18 bis 29, **dadurch gekennzeichnet, dass** in der Fläche (12) eindeutig zuordenbare Kennfelder (18) gebildet sind und dass die Erkennungsmittel (14) bei Annäherung des Objekts (O) an das Kennfeld (18) das Objekt erkennen und je nach Kennfeld eine für das Kennfeld (18) charakteristische Kennung wiedergeben und beim gegebenenfalls erfolgenden Antippen eine weitere Funktion auslösen..

31. Verfahren nach einem der Ansprüche 18 bis 30, **dadurch gekennzeichnet, dass** das Objekt (O) ein Körperteil, vorzugsweise ein Finger eines Benutzers ist und dass die Fläche (12) so klein ist, dass der Finger zur Bedienung eines Bedienelements (30) im Wesentlichen nicht verschoben, sondern abgerollt wird.

## Claims

1. Optoelectronic device for detecting the position and/or movement of an object (O) with
- a plurality of transmitters (A,B,C,D) for emitting radiation, in particular light radiation,
- at least one receiver (E,E1,E2,E3,E4) for receiving the radiation emitted by the transmitters (A-D) and reflected back by the object (O) or the radiation emitted from transmitters associated with the object,
- a plurality of mutually different radiation paths, which are formed between at least a part of the transmitters (A-D), the object (O) and the receivers (E,E1-E4) or between transmitters associated with the object and the receivers,
- a timing circuit for cycled switching of the transmitters (A-D) of the different radiation paths,
- an evaluation device (11), which converts the signals received by the receivers (E,E1-E4) for the different radiation paths into values (x,y) for detection of the position and/or movement of the object (O) along a line or in a surface (12),
wherein for three-dimensional detection of the position and/or movement of the object (O), the timing circuit switches a plurality of, but at least a part of the transmitters (A-D) and/or receivers (E,E1-E4) in at least one further cycle such that the space, into which the transmitters (A-D) emit, is illuminated nearly uniformly, and wherein the evaluation device (11) determines a value for determination of the distance (d) of the object (O) from the line or surface (12) on the basis of the radiation radiated or radiated back by the object (O) during the further cycle.

2. Device according to Claim 1, **characterised in that** the receivers (A-D) and the transmitters (E,E1-E4) lie in one plane and/or are disposed below an operating surface forming the surface (12) and emit into the space beyond the operating surface in the further cycle.

3. Device according to one of Claims 1 or 2, **characterised in that** at least four transmitters (A-D) are disposed in a cross-like arrangement, being operated alternately cycled crosswise for two-dimensional detection.

4. Device according to one of the preceding claims, **characterised in that** a further light source (20) is disposed as transmitter in the vicinity of the at least one receiver (E,E1-E4) so that the light of the further light source (20) essentially radiates into the receiver (E,E1-E4).

5. Device according to one of the preceding claims, **characterised in that** the light paths in the form of radiation paths are actuated alternately, and that the evaluation unit (11) controls the power of the transmitters with a power control means preferably without delay such that a dc component without cycle-synchronous ac component is present at the receivers (E,E1-E4).

6. Device according to one of the preceding claims, **characterised in that** for assessment of the position, the control voltages are touched at control elements (R₁,R₂) associated with the respective transmitters (A-D) and fed to a comparator (V III) for determination of the value.

7. Device according to one of the preceding claims, **characterised in that** recognition elements (14) are provided, which recognise the movement pattern when the surface (12) is touched, and that storage means store the determined value of radiation emitted back as a reference value (Ref_{3D}).

8. Device according to Claim 7, **characterised in that** comparison elements (15) are provided, which determine the distance (d) of the object (O) from the surface (12) by a comparison between the stored value of radiation emitted back, or a value derived therefrom, and the current value, wherein the value derived therefrom is preferably the value occurring shortly before the object (O) impinges upon the surface (12).

9. Device according to one of the preceding claims, **characterised in that** the device recognises the approach of the object (O) and effectively switches the position detection to be effective by changing the basic cycles.

10. Device according to one of Claims 7 to 9, **characterised in that** the storage means (13) stores the determined reference value (Ref_{3D}) and deletes it again if a comparator (16) determines that the current value falls below a given value (SW2) or a value derived from the reference value.

11. Device according to one of the preceding claims, **characterised in that** the transmitters (A-D) are disposed at the comers of the surface (12) and the receivers (E1-E4) between the transmitters.

12. Device according to Claim 11, **characterised in that** two respective transmitters (A-D) disposed at adjacent comers of the surface (12) together with the receivers (E1-E4) located between them form a measurement unit, and that the transmitters and receivers (A-E3-C, B-E4-D; A-E1-B, C-E2-D) lying opposite one another for determination of a respective value in x- or y-direction are operated alternately.

13. Device according to one of the preceding claims, **characterised in that** for determination of an x-value or a y-value of the position of the object (O) in the surface (12), two receivers lying opposite one another relative to the surface are provided, which alternately supply measured values, which are averaged to determine the position.

14. Device according to one of the preceding claims, **characterised in that** in the surface (12) identification fields (18) that may be unequivocally assigned for the radiation of the transmitters are formed and **in that** on approach of the object (O) to the identification field (18), the recognition elements (14) recognise the object and, depending on the identification field, reproduce a characteristic identification for the identification field (18) and trigger a further function in the case where touching has occurred..

15. Device according to one of the preceding claims, **characterised in that** light-emitting diodes (A-E) illuminate the surface or key field simultaneously and at least intermittently serve as receiver and/or compensating element.

16. Device according to one of the preceding claims, **characterised in that** the object (O) is a body part, preferably a finger of a user, and that the surface (12) is so small that the finger is essentially not shifted, but rolled for operation of an operating element (30).

17. Device according to one of the preceding claims, **characterised in that** the transmitters (A,B) and receivers (E) are disposed above the surface (12) or radiate or receive light above the surface (12) via light-conducting elements, wherein the medium separating the transmitters (A,B), receivers (E) and the object (O) is air or another medium, which the radiation may radiate through.

18. Method for detecting the position and/or movement of an object (O) optoelectronically with a device comprising
- a plurality of transmitters (A,B,C,D) for emitting radiation, in particular light radiation,
- at least one receiver (E,E1,E2,E3,E4) for receiving the radiation emitted by the transmitters (A-D) and reflected back by the object (O) or the radiation emitted from transmitters associated with the object,
- a plurality of mutually different radiation paths, which are formed between at least a part of the transmitters (A-D), the object (O) and the receivers (E,E1-E4) or between transmitters associated with the object and the receivers,
- a timing circuit for cycled switching of the transmitters (A-D) of the different radiation paths,
- an evaluation device (11), which converts the signals received by the receivers (E,E1-E4) for the different radiation paths into values (x,y) for detection of the position and/or movement of the object (O) along a line or in a surface (12),
wherein for three-dimensional detection of the position and/or movement of the object (O), the timing circuit switches a plurality of, but at least a part of the transmitters (A-D) and/or receivers (E,E1-E4) in at least one further cycle such that the space, into which the transmitters (A-D) emit, is illuminated nearly uniformly, and wherein the evaluation device (11) determines a value for determination of the distance (d) of the object (O) from the line or surface (12) on the basis of the radiation radiated or radiated back by the object (O) during the further cycle.

19. Method according to Claim 18, **characterised in that** the transmitters and/or receivers disposed below an operating surface forming the surface (12) emit into the space beyond the operating surface in a further cycle.

20. Method according to one of Claims 18 or 19, **characterised in that** at least four transmitters (A-D) disposed in a cross-like arrangement are operated alternately cycled crosswise for two-dimensional detection.

21. Method according to one of Claims 18 to 20, **characterised in that** in the further cycle a further light source (20) as transmitter in the vicinity of the at least one receiver (E,E1-E4) radiates light essentially into the receiver (E,E1-E4) to compensate.

22. Method according to one of the Claims 18 to 21, **characterised in that** the light paths in the form of radiation paths are actuated alternately, and that the evaluation unit (11) controls the power of the transmitters with a power control means (36) preferably without delay such that a dc component without cycle-synchronous ac component is present at the receivers (E,E1-E4).

23. Method according to one of the Claims 18 to 22, **characterised in that** for assessment of the position, the control voltages are touched at control elements (R₁,R₂) associated with the respective transmitters (A-D) and fed to a comparator (V III) for determination of the value.

24. Method according to one of the Claims 18 to 23, **characterised in that** recognition elements (14) recognise the movement pattern when the surface (12) is touched, and that storage means (13) store the determined value of radiation emitted back as a reference value (Ref_{3D}).

25. Method according to Claim 24, **characterised in that** comparison elements (15) determine the distance (d) of the object (O) from the surface (12) by a comparison between the stored value of radiation emitted back, or a value derived therefrom, and the current value, wherein preferably the value is used as derived value which value is occurring shortly before the object (O) impinges upon the surface (12).

26. Method according to one of the Claims 18 to 25, **characterised in that** the device recognises the approach of the object (O) and effectively switches the position detection to be effective by changing the basic cycles.

27. Method according to one of Claims 24 to 26, **characterised in that** the storage means (13) stores the determined reference value (Ref_{3D}) and deletes it again if a comparator (16) determines that the current value falls below a given value (SW2) or a value derived from the reference value.

28. Method according to one of the Claims 18 to 27, **characterised in that** two respective transmitters (A-D) disposed at adjacent comers of the surface (12) together with the receivers (E1-E4) located between them form a measurement unit, and that the transmitters and receivers (A-E3-C, B-E4-D; A-E1-B, C-E2-D) lying opposite one another for determination of a respective value in x- or y-direction are operated alternately (Figure 8).

29. Method according to one of the Claims 18 to 28, **characterised in that** for determination of an x-value or a y-value of the position of the object (O) in the surface (12), two receivers lying opposite one another relative to the surface alternately supply measured values, which are averaged to determine the position.

30. Method according to one of the Claims 18 to 29, **characterised in that** in the surface (12) identification fields (18) that may be unequivocally assigned are formed and that on approach of the object (O) to the identification field (18), the recognition elements (14) recognise the object and, depending on the identification field, reproduce a characteristic identification for the identification field (18) and trigger a further function in the case where touching has occurred.

31. Method according to one of the Claims 18 to 30, **characterised in that** the object (O) is a body part, preferably a finger of a user, and that the surface (12) is so small that the finger is essentially not shifted, but rolled for operation of an operating element (30).

## Revendications

1. Dispositif opto-électronique pour détecter la position et/ou le mouvement d'un objet (O) comportant
- plusieurs émetteurs (A, B, C, D) pour l'émission d'un rayonnement, en particulier d'un rayonnement lumineux,
- au moins un récepteur (E, E1, E2, E3, E4) pour la réception du rayonnement émis par les émetteurs (A-D) et réfléchi par l'objet (O) ou du rayonnement émis par les émetteurs associés à l'objet,
- plusieurs parcours de rayonnement différents les uns des autres qui sont formés entre au moins une partie des émetteurs (A-D), l'objet (O) et les récepteurs (E, E1-E4) ou entre des émetteurs associés à l'objet et les récepteurs,
- un circuit de synchronisation pour la commande cadencée des émetteurs (AD) des différents parcours de rayonnement,
- un dispositif d'exploitation (11) qui convertit les signaux reçus par les récepteurs (E, E1-E4) pour les différents parcours de rayonnement en valeurs (x, y) afin de détecter la position et/ou le mouvement de l'objet (O) le long d'une ligne ou dans une surface (12), dans lequel
pour la détection en trois dimensions de la position et/ou du mouvement de l'objet (O), le circuit de synchronisation commande plusieurs, mais au moins une partie des émetteurs (A-D) et/ou des récepteurs (E, E1-E4) en au moins un autre rythme, de manière que l'espace, dans lequel émettent les émetteurs (A-D), soit éclairé le plus uniformément, et dans lequel le dispositif d'exploitation détermine, sur la base du rayonnement réfléchi ou émis par l'objet (O) pendant l'autre rythme, une valeur destinée à déterminer la distance (d) de l'objet (O) par rapport à la ligne ou la surface (12).

2. Dispositif selon la revendication 1, **caractérisé en ce que** les récepteurs (AD) et les émetteurs (E, E1-E4) se situent dans un plan et/ou sont disposés sous une surface de commande formant la surface (12), et émettent, dans l'autre rythme, dans l'espace situé au-delà de la surface de commande.

3. Dispositif selon l'une des revendications 1 ou 2, **caractérisé en ce qu'**au moins quatre émetteurs (A-D) sont disposés en croix et sont mis en service alternativement en croix pour la détection en deux dimensions.

4. Dispositif selon l'une des revendications précédentes, **caractérisé en ce qu'**une autre source lumineuse (20) est disposée, en tant qu'émetteur, à proximité du ou des récepteurs (E, E1-E4), de manière que la lumière de l'autre source lumineuse (20) parvienne sensiblement dans le récepteur (E, E1-E4).

5. Dispositif selon l'une des revendications précédentes, **caractérisé en ce que** les parcours lumineux réalisés en tant que parcours de rayonnement, sont commandés alternativement et **en ce que** l'unité d'exploitation (11) règle de préférence sans délai la puissance des émetteurs avec une régulation de puissance telle que l'on ait sur les récepteurs (E, E1-E4) une composante de lumière continue sans composante de lumière alternative synchrone.

6. Dispositif selon l'une des revendications précédentes, **caractérisé en ce que** pour apprécier la position les tensions de régulation sont prélevées sur des éléments de régulation (R₁, R₂) associés aux émetteurs (A-D) respectifs, et sont envoyées à un comparateur (V III) pour la détermination de la valeur.

7. Dispositif selon l'une des revendications précédentes, **caractérisé en ce que** sont prévus des moyens de reconnaissance (14) qui reconnaissent le modèle de mouvement au contact avec la surface (12) et **en ce que** des mémoires mémorisent la valeur ainsi déterminée sur le rayonnement réfléchi en tant que valeur de référence (Ref_{IIID}).

8. Dispositif selon la revendication 7, **caractérisé en ce que** sont prévus des moyens de comparaison (15) qui déterminent l'éloignement (d) de l'objet (O) de la surface (12) par une comparaison entre la valeur mémorisée ou une valeur dérivée de celle-ci sur le rayonnement réfléchi et la valeur actuelle, la valeur dérivée étant de préférence la valeur qui s'applique juste avant que l'objet (O) ne parvienne sur la surface (12).

9. Dispositif selon l'une des revendications précédentes, **caractérisé en ce que** le dispositif reconnaît l'approche de l'objet (O) et active la détection de position en modifiant les fréquences de rythme.

10. Dispositif selon l'une des revendications 7 à 9, **caractérisé en ce que** la mémoire (13) mémorise la valeur de référence (Ref_{IIID}) déterminée et l'efface à nouveau lorsqu'un comparateur (16) constate que la valeur actuelle passe au-dessous d'une valeur prédéfinie (SW2) ou une valeur dérivée de la valeur de référence.

11. Dispositif selon l'une des revendications précédentes, **caractérisé en ce que** les émetteurs (A-D) sont disposés aux angles de la surface (12) et les récepteurs (E, E1-E4) entre les émetteurs.

12. Dispositif selon la revendication 11, **caractérisé en ce que** deux émetteurs (A-D) disposés en des angles voisins de la surface (12) forment chaque fois avec le récepteur (E, E1-E4) qui se situe entre eux, une unité de mesure et **en ce que** les émetteurs et récepteurs (A-E3-C, B-E4-D ; A-E1-B, C-E2-D) opposés l'un à l'autre pour la détermination d'une valeur respective dans la direction (x) ou (y), sont mis alternativement en service.

13. Dispositif selon l'une des revendications précédentes, **caractérisé en ce que** pour déterminer une valeur (x) ou une valeur (y) de la position de l'objet (O) dans la surface (12), il est prévu deux récepteurs opposés l'un à l'autre sur la surface, qui fournissent alternativement des valeurs de mesure dont on fait la moyenne pour déterminer la position.

14. Dispositif selon l'une des revendications précédentes, **caractérisé en ce que** dans la surface (12) sont formés pour le rayonnement des émetteurs des champs caractéristiques pouvant être clairement corrélés, et **en ce que** les moyens de reconnaissance (14) reconnaissent l'objet (O) lorsque celui-ci s'approche du champ caractéristique (18), et, suivant le champ caractéristique, ils fournissent une courbe caractéristique du champ caractéristique (18), et déclenchent une autre fonction en cas de commande tactile éventuelle.

15. Dispositif selon l'une de revendications précédentes, **caractérisé en ce que** des diodes luminescentes (A-E) éclairent en même temps la surface ou la zone des touches et servent au moins par moments de récepteur et/ou d'élément de compensation.

16. Dispositif selon l'une des revendications précédentes, **caractérisé en ce que** l'objet (O) est une partie corporelle, de préférence le doigt d'un utilisateur et **en ce que** la surface (12) est si petite que le doigt n'est sensiblement pas déplacé pour commander un élément de commande (30), mais roulé.

17. Dispositif selon l'une des revendications précédentes, **caractérisé en ce que** les émetteurs (A, B) et récepteurs (E) sont disposés au-dessus de la surface (12) ou reçoivent de la lumière, par des éléments guidant la lumière, au-dessus de la surface (12), le milieu séparant les émetteurs (A, B), récepteurs (E) et l'objet (O) étant de l'air ou un autre milieu pouvant être traversé par le rayonnement.

18. Procédé de détection opto-électronique de la position et/ou du mouvement d'un objet (O) au moyen d'un dispositif comportant
- plusieurs émetteurs (A, B, C, D) pour l'émission d'un rayonnement, en particulier d'un rayonnement lumineux,
- au moins un récepteur (E, E1, E2, E3, E4) pour la réception du rayonnement émis par les émetteurs (A-D) et réfléchi par l'objet (O) ou du rayonnement émis par les émetteurs associés à l'objet,
- plusieurs parcours de rayonnement différents les uns des autres qui sont formés entre au moins une partie des émetteurs (A-D), l'objet (O) et les récepteurs (E, E1-E4) ou entre des émetteurs associés à l'objet et les récepteurs,
- un circuit de synchronisation pour la commande cadencée des émetteurs (AD) des différents parcours de rayonnement,
- un dispositif d'exploitation (11) qui convertit les signaux reçus par les récepteurs (E, E1-E4) pour les différents parcours de rayonnement en valeurs (x, y) afin de détecter la position et/ou le mouvement de l'objet (O) le long d'une ligne ou dans une surface (12), dans lequel
pour la détection en trois dimensions de la position et/ou du mouvement de l'objet (O), le circuit de synchronisation commande plusieurs, mais au moins une partie des émetteurs (A-D) et/ou des récepteurs (E, E1-E4) en au moins un autre rythme, de manière que l'espace, dans lequel émettent les émetteurs (A-D), soit éclairé le plus uniformément, et dans lequel le dispositif d'exploitation détermine, sur la base du rayonnement réfléchi ou émis par l'objet (O) pendant l'autre rythme, une valeur destinée à déterminer la distance (d) de l'objet (O) par rapport à la ligne ou la surface (12).

19. Procédé selon la revendication 18, **caractérisé en ce que** les émetteurs et/ou récepteurs disposés sous une surface de commande formant la surface (12), émettent dans un autre rythme dans l'espace situé au-delà de la surface de commande.

20. Procédé selon la revendication 18 ou 19, **caractérisé en ce qu'**au moins quatre émetteurs (A-D) sont disposés en croix et sont mis en service alternativement en croix pour la détection en deux dimensions.

21. Procédé selon l'une des revendications 18 à 20, **caractérisé en ce que** dans l'autre rythme une autre source lumineuse (20) émet en tant qu'émetteur à proximité du ou des récepteurs (E, E1-E4) pour la compensation de la lumière sensiblement dans le récepteur (E, E1-E4).

22. Dispositif selon l'une des revendications 18 à 21, **caractérisé en ce que** les parcours lumineux réalisés en tant que parcours de rayonnement, sont commandés alternativement et **en ce que** l'unité d'exploitation (11) règle de préférence sans délai la puissance des émetteurs avec une régulation de puissance telle que l'on ait sur les récepteurs (E, E1-E4) une composante de lumière continue sans composante de lumière alternative synchrone.

23. Procédé selon l'une des revendications 18 à 22, **caractérisé en ce que** pour apprécier la position les tensions de régulation sont prélevées sur des éléments de régulation (R₁, R₂) associés aux émetteurs (A-D) respectifs, et sont envoyées à un comparateur (V III) pour la détermination de la valeur.

24. Procédé selon l'une des revendications 18 à 23, **caractérisé en ce que** des moyens de reconnaissance (14) reconnaissent le modèle de mouvement lorsque l'on touche la surface (12) et **en ce que** des mémoires (13) mémorisent la valeur déterminée ici sur le rayonnement réfléchi, en tant que valeur de référence (Ref_{IIID}).

25. Procédé selon la revendication 24, **caractérisé en ce que** des moyens de comparaison (15) déterminent la distance de l'objet (O) de la surface (12) par une comparaison entre la valeur mémorisée ou une valeur dérivée de celle-ci sur le rayonnement réfléchi et la valeur actuelle, la valeur dérivée étant de préférence la valeur qui s'applique juste avant que l'objet (O) ne parvienne sur la surface (12).

26. Procédé selon l'une des revendications 18 à 25, **caractérisé en ce que** le dispositif reconnaît l'approche de l'objet (O) et active la détection de position en modifiant les fréquences de rythme.

27. Procédé selon l'une des revendications 24 à 26, **caractérisé en ce que** la mémoire (13) mémorise la valeur de référence (Ref_{IIID}) déterminée et l'efface à nouveau lorsqu'un comparateur (16) constate que la valeur actuelle passe au-dessous d'une valeur prédéfinie (SW2) ou une valeur dérivée de la valeur de référence.

28. Procédé selon l'une des revendications 18 à 27, **caractérisé en ce que** deux émetteurs (A-D) disposés en des angles voisins de la surface (12) forment chaque fois avec le récepteur (E, E1-E4) qui se situe entre eux, une unité de mesure et **en ce que** les émetteurs et récepteurs (A-E3-C, B-E4-D ; A-E1-B, C-E2-D) opposés l'un à l'autre pour la détermination d'une valeur respective dans la direction (x) ou (y), sont mis alternativement en service (fig. 8).

29. Procédé selon l'une des revendications 18 à 28, **caractérisé en ce que** pour déterminer une valeur (x) ou une valeur (y) de la position de l'objet (O) dans la surface (12), deux récepteurs fournissent en alternance des valeurs de mesure dont on fait la moyenne pour déterminer la position.

30. Procédé selon l'une des revendications 18 à 29, **caractérisé en ce que** dans la surface (12) sont formés des champs caractéristiques, pouvant être clairement corrélés, et **en ce que** les moyens de reconnaissance (14) reconnaissent l'objet (O) lorsque celui-ci s'approche du champ caractéristique (18), et, suivant le champ caractéristique, ils fournissent une courbe caractéristique du champ caractéristique (18), et déclenchent une autre fonction en cas de commande tactile éventuelle.

31. Procédé selon l'une des revendications 18 à 30, **caractérisé en ce que** l'objet (O) est une partie corporelle, de préférence le doigt d'un utilisateur et **en ce que** la surface (12) est si petite que le doigt n'est sensiblement pas déplacé pour commander un élément de commande (30), mais roulé.
